# EUROPÄISCHE PATENTSCHRIFT

(11) **EP 1 330 957 B1**
(45) Veröffentlichungstag und Bekanntmachung des Hinweises auf die Patenterteilung: **02.12.2009**
(21) Anmeldenummer: 03000872.6
(22) Anmeldetag: 15.01.2003
(51) Int. Cl.: A23L 1/303, A23L 1/305, A23L 1/308

(54) **Nahrungsergänzungsmittel**
Nutritional supplement
Complément alimentaire

(30) Priorität: 15.01.2002 DE 10201254
(43) Veröffentlichungstag der Anmeldung: 30.07.2003
(73) Patentinhaber: Bauer, Karl-Heinz, 8610 Uster (CH)
(72) Erfinder: Bauer, Karl-Heinz, 8610 Uster (CH)
(74) Vertreter: Lucht, Silvia

(56) Entgegenhaltungen:
- EP-A- 0 768 043
- WO-A-00/72854
- WO-A-99/53777
- US-A- 5 700 782
- US-A- 5 962 030
- US-A- 5 968 896

## Beschreibung

### Stand der Technik

Die Erfindung geht aus von einem Nahrungsergänzungsmittel nach dem Oberbegriff des Anspruchs 1.

Nahrungsergänzungsmittel werden zum einen bei Sportlern zum Muskelaufbau und zum anderen bei Personen mit Übergewicht zum Fettabbau eingesetzt. Dabei wird das Nahrungsergänzungsmittel entweder zusätzlich zu den normalen Mahlzeiten eingenommen oder die Mahlzeiten werden ganz oder teilweise durch das Nahrungsergänzungsmittel substituiert. Die aus dem Stand der Technik bekannten Nahrungsergänzungsmittel für den Muskelaufbau bei Sportlern aber auch zum Fettabbau bei übergewichtigen Personen enthalten lediglich die Zutaten, die zur Erzielung des erwünschten Erfolgs notwendig sind. Zum Muskelaufbau sind hierzu in erster Linie Eiweiße notwendig. Zum Fettabbau bei Übergewichtigen werden Stoffe eingesetzt, die ein Völlegefühl oder ein Gefühl der Sättigung erzeugen. Bei einer Einnahme derartiger Nahrungsergänzungsmittel über einen längeren Zeitraum, insbesondere im Falle einer Substitution von Mahlzeiten durch das Nahrungsergänzungsmittel können daher Mangelerscheinungen auftreten. Um diese zu vermeiden sollten parallel zum Nahrungsergänzungsmittel die bei einer gesunden und natürlichen Mischkost zugeführten Aminosäuren, Mineralien, Spurenelemente, Vitamine und Ballaststoffe zugeführt werden. Als nachteilig erweist sich, dass die Nahrungsergänzungsmittel häufig ohne ärztliche Beratung eingenommen werden und die für eine gesunde Ernährung notwendigen zusätzlichen Stoffe dem üblichen Verbraucher nicht bekannt sind.

Entsprechende Nahrungsergänzungsmittel werden beispielsweise in WO 00/72854 offenbart.

Die empfohlene natürliche Mischkost sollte aus 456 g Substanz und insgesamt 8580 kJ, davon 79 g Protein, 62 g Fett, 274 g Kohlehydrate und 41 g Ballaststoffe, pro Tag bestehen, sowie Mineralien und Vitamine enthalten. Dies entspricht dem Tagesbedarf eines Erwachsenen.

### Die Erfindung und ihre Vorteile

Demgegenüber hat das Nahrungsergänzungsmittel mit den kennzeichnenden Merkmalen des Anspruchs 1 den Vorteil, dass selbst bei einer Substitution einer oder mehrerer Mahlzeiten durch das Nahrungsergänzungsmittel der Bedarf an Mineralien, Vitaminen, Spurenelementen und Aminosäuren abgedeckt wird. Mangelerscheinungen werden damit vermieden. Die dem Körper zugeführten Stoffe entsprechen denjenigen einer gesunden natürlichen Mischkost. Je nach Anwendungsfall kann die Zusammensetzung des Nahrungsergänzungsmittel variiert werden. Als Kriterien gelten Geschlecht, Alter, Muskelaufbau oder Gewichtsreduzierung. Soll das Nahrungsergänzungsmittel beispielsweise bei Sportlern zum Muskelaufbau eingesetzt werden, so ist der Anteil an Aminosäuren und Eiweißen besonders hoch zu wählen. Wird das Nahrungsergänzungsmittel dagegen bei Personen mit Übergewicht zum Fettabbau eingesetzt, so kann dem Nahrungsergänzungsmittel Guakernmehl beigemischt sein, was bei der Einnahme ein Völlegefühl erzeugt. Auf dieses Guakernmehl kann ebenso wie auf die Kohlenhydrate bei Sportlern vollständig oder nahezu vollständig verzichtet werden. Auch der Anteil an Omega-3-Fettsäuren kann bei Sportlern zugunsten von Aminosäuren reduziert werden. Ein gewisser Anteil an Omega-3-Fettsäuren oder pflanzlichen Ölen ist jedoch in jedem Fall notwendig, da ansonsten Mineralstoffe und Vitamine nicht in den Stoffwechsel aufgenommen werden. Zur Förderung des Austausches von Mikronährstoffen und des Verminderung Kapillarer Blutungen sind Bioflavonoide enthalten.

Das Nahrungsergänzungsmittel wurde von einer gesunden Mischkost abgeleitet. Es besteht aus Aminosäuren, Mineralien, Spurenelementen und Vitaminen. Angereichert mit Fetten, Kohlehydraten und Ballaststoffen kann es die natürliche Mischkost ersetzen.

Durch eine Kombination des Nahrungsergänzungsmittels mit einem täglichen Training, beispielsweise einem moderaten Ausdauertraining, kann eine Steigerung des Energieumsatzes die angestrebte Gewichtsreduzierung optimieren. Das Nahrungsergänzungsmittel deckt dabei den durch die körperliche Aktivität gesteigerten erhöhten Bedarf an Mineralien, Enzymen und Aminosäuren. Dies wirkt sich positiv auf das Herz-Kreislauf-System aus, verbessert die Cholesterinwerte und den Calciumstoffwechsel sowie das Immunsystem. Außerdem wird die Sauerstoffzufuhr gesteigert und das Gehirn besser durchblutet. Der aktive und passive Bewegungsapparat wird stabilisiert, die Thrombosegefahr gesenkt, das Krebsrisiko verringert, Diabetes mellitus, Stress, arterielle Hypertonie, erhöhte Blutfettwerte und Gicht wird vorgebeugt. Außerdem können Depressionen, Nervosität, Unruhe, Kopfschmerzen, Migräne, Rückenschmerzen, Darmträgheit, Verstopfung, Kurzatmigkeit, Schlafstörungen, Medikamentenmissbrauch, Schüchternheit und Einsamkeitsgefühle beseitigt werden.

Wird das Nahrungsergänzungsmittel als Reduktionskost eingesetzt, so ist ein Mischverhältnis von Eiweiß zu Kohlenhydraten zu Fett von 4 zu 1 zu 0,5 geeignet. Auf diese Weise wird eine hohe Fettverbrennung im Körper erreicht und ein Abbau von Muskeleiweiß verhindert. Dabei ist der Anteil der Kohlenhydrate in der Kost so ausreichend, dass keine Ketonkörper im Blut entstehen können.

Der Proteingehalt ist Hauptbestandteil des Nahrungsergänzungsmittels. Der prozentuale Anteil kann je nach Anwendungsfall unterschiedlich sein. Als Proteinquelle ist Calciumcaseinat, das heißt Milcheiweiß mit Calcium, oder Sojaeiweiß vorgesehen. Ein geringerer Anteil an Protein wird in Form von kollagenem Protein durch die Mikroverkapselung der Omega-3-Fettsäuren geliefert. Hierzu kann beispielsweise Schweinegelatine mit einem hohen Gehalt an Glycin, Prolin, Hydroxyprolin, Glutaminsäure, Arginin, Asparaginsäure und Lysin eingesetzt werden. Das Casein stellt den größten Anteil des Kuhmilchproteins und besitzt gegenüber Lactobulmin eine biologische Wertigkeit von 73 bis 77. Es hat gegenüber anderen schnellverdaulichen Proteinen mit höherer biologischer Wertigkeit den Vorteil, daß es durch das saure Milieu im Magen geliert. Mit dem Casein gleichzeitig aufgenommene Kohlenhydrate lassen den Blutzuckerspiegel geringer und gleichmäßiger ansteigen. Damit eignet sich Casein in besonderer Weise, Heißhungerattacken zu vermeiden und kohlenhydratmetabolisierten Fettansatz zu verringern. Die aus dem Casein stammenden Aminosäuren sind zwar mit Verzögerung im Blut nachweisbar, können jedoch bis zu acht Stunden nach der Nahrungsaufnahme noch festgestellt werden. Damit stehen sie im Körper länger zur Verfügung als Aminosäuren aus schneller wirksamen Proteinen. Darüber hinaus weist Casein einen deutlich höheren Glutamingehalt als andere Proteinquellen auf. Wegen seiner hohen Anteile an glucoplastischen Aminosäuren wird Casein den antikatabolen Proteinen zugeordnet. Aufgrund des hohen Anteils an semi-essentieller Glutaminsäure und der zu Glutamin katabolisierbaren Aminosäure Prolin im Caseinat unterstützt das Nahrungsergänzungsmittel das Immunsystem, erhöht die Glycogenspeicherung in der Muskulatur und steigert die Pufferkapazität des Blutes. Außerdem besitzt es eine zellvolumisierende Wirkung und stimuliert die Ausschüttung von Wachstumshormonen. Die Aminosäuren und ihre Metaboliten wirken insbesondere als Neurotransmitter, als Energiequelle und über hormonelle und enzymatische Mechanismen als metabolischer Regulator. Freie Aminosäuren stehen in ausreichender Menge zur Verfügung und müssen nicht als Energiereserven bei erschöpfter Kohlenhydratversorgung aus dem Muskel abgezogen werden.

Nach einer vorteilhaften Ausgestaltung der Erfindung setzen sich die Kohlenhydrate des Nahrungsergänzungsmittels zusammen aus Maltodextrin, aus der Maisstärke und der Saccharose der Omega-3-Fettsäuren-Mikroverkapselung, dam Galactomannan aus Guarkernmehl und der Lactose des Calciumcaseinats. Zur kurzzeitigen Deckung des Energiebedarfs stehen somit Di- und Polysaccharide zur Verfügung. Der Energiestoffwechsel wird stimuliert und die Erschließung körpereigener Energiereserven wird im Stoffwechselkomplex angeregt. Das Galactomannan unterstützt als überwiegend löslicher Ballaststoff gemeinsam mit dem Casein die Magen-Darm-Passage. Der Blutzuckeranstieg durch die rasche Glucoseresorption wird gedämpft und verzögert. Blutzuckerspitzen werden vermieden und die renale Glucoseausscheidung vermindert. Die anregende Wirkung auf die Ausschüttung thyreotropher Hormone wie Thyroxin und Trijodthyronin stimuliert den Metabolismus der Kohlenhydrate, Proteine, Lipide, Vitamine, Nucleinsäuren, lonen und den Modulationseffekt einiger Hormone. In höheren Konzentrationen hemmen die thyreotrophen Hormone die Glycogensynthese und vermindern den Glycogengehalt in der Muskulatur und der Leber. Lipide werden mobilisiert und deren Synthese wird stimuliert. Die cholsterinhemmende Wirkung ist von großer Bedeutung. Die Kohlenhydrate des Nahrungsergänzungsmittel provozieren einen aktiv erhöhten Energiestoffumsatz.

Der Gesamtfettgehalt des Nahrungsergänzungsmittels liegt vorteilhafterweise unter 10 % und setzt sich zusammen aus microverkapseltem Fischöl und dem Milchfettrestgehalt des Calciumcaseinats. Für die Wirkung sind die mehrfach ungesättigten Fettsäuren und die darin enthaltenen Omega-3-Fettsäuren verantwortlich. Sie gehören zu den essentiellen Fettsäuren und führen zur Prävention und Therapie von kardiovaskulären Erkrankungen, Hypertonie und Diabetes mellitus. Außerdem wirken sie entzündlichen und allergischen Erkrankungen wie Gelenkrheumatismus und Hauterkrankungen entgegen. Auch bei einer bewußten verringerten Fettaufnahme müssen essentielle Fettsäuren zugeführt werden. Ein Mangel kann zu starken gesundheitlichen Beeinträchtigungen führen wie beispielsweise hoher Blutcholesterinspiegel mit ungüstigem HDL-LDL-Cholsterin-Verhältnis. Fette sind außerdem für die Aufnahme und den Transport fettlöslicher Mikronährstoffe lebensnotwendig. Dazu gehören Vitamine, Provitamine und andere Stoffe, die protektive Eigenschaften für die Körperzellen und Organe besitzen.

Der Fettanteil des Nahrungsergänzungsmittels kann auch aus hochwertigen langkettigen Pflanzenölen bestehen, wie beispielsweise Olivenöl oder Distelöl.

Nach einer vorteilhaften Ausgestaltung der Erfindung, je nach Bedarf ob Kind, Jugendlicher oder Erwachsener, nach Geschlecht und/oder Absicht, die Muskeln aufzubauen oder das Körpergewicht zu reduzieren, beträgt der Aminosäurenanteil zwischen 10 und 900 g/kg, mit einem hohen Anteil essentieller Aminosäuren. Der Anteil der Omega-3-Fettsäuren bzw. essentiellen Fettsäuren sollte zwischen 5 und 500 g/kg, der Anteil der Kohlenhydrate, wie beispielsweise Maltodextrin, Maisstärke oder Saccharose, zwischen 5 und 500 g/kg, der Ballaststoffanteil zwischen 0 und 500 g/kg, die Spurenelemente, Mineralien und Vitamine zwischen 0,1 und 200 g/kg liegen.

Der Muskelaufbau verschiebt den Schwerpunkt in Richtung Aminosäuren, der Schwerpunkt zur Fettreduktion bevorzugt ein bestimmtes Mischungsverhältnis der Aminosäuren, Kohlenhydrate und Fette wie zum Beispiel 4 : 1 : 0,5.

Um den Geschmack des Nahrungsergänzungsmittels zu verbessern können Aromastoffe und Süßstoffe zugefügt werden. Diese haben einen Anteil von 1 bis 100 g/kg bei Aromastoffen und von 1 bis 3 g/kg bei Süsstoffen. Als Süsstoff wird bevorzugt Saccharin eingesetzt.

Nach einer weiteren vorteilhaften Ausgestaltung der Erfindung ist als Wirkstoff Vanadylsulfat vorgesehen. Dieses hat den Vorteil, dass es die Triglyceride im Körper absenkt. Die Insulinempfindlichkeit wird erhöht und die Aminosäurenresorption sowie die Glycogenspeicherung in der Muskulatur verbessert. Der Anteil an Vanadylsulfat beträgt zwischen 0,05 und 100 g/kg.

Als weitere Substanz mit einer leistungssteigernden Wirkung kann L-Creatin als Creatinmonohydrat vorgesehen sein. L-Creatin ist Bestandteil des Creatinphosphates in den Muskelzellen und stellt als Energielieferant bei kurzzeitigem, schnellem Energiebedarf je nach Verfügbarkeit den limitierenden Faktor dar. Durch Creatinphosphat wird Adenosintriphosphat sofort resynthetisiert und verzögert bei höherem Vorrat in den Zellen die Erschöpfung des Energiespeichers.

Stellen die vorgenannten Substanzen Vanadylsulfat und L-Creatin einen Energielieferanten dar, um Hungerphasen nicht auf den Muskel wirken zu lassen und einer atrophischen Entwicklung entgegenzuwirken, so ist das im Nahrungsergänzungsmittel enthaltene L-Carnitin ein Katalysator im Fettstoffwechsel, der direkt in den Zellen und ihren Kraftwerken, den Mitochondrien wirkt. Nur etwa 10 % des täglichen L-Carnitin-Bedarfs kann der Organismus selbst synthetisieren, wobei zur Synthese von 1 g L-Carnitin etwa 30 g biologisch reines Protein verbraucht wird. Bei längerer körperlicher Belastung und ungenügender Proteinzufuhr kann es also schnell zu einer Überlastung des Proteinstoffwechsels kommen.

L-Carnitin gehört zu den notwendigen Substanzen um gesund und stressfrei abzunehmen. Wegen seiner vitaminartigen Wirkung gehört L-Carnitin zu den am besten erforschten leistungssteigernden Wirkstoffen. Prophylaktisch bei Beginn einer Trainingsphase eingesetzt, wirkt es der Bildung von zellschädigendem Ammoniak und Harnstoff entgegen, reduziert die Entstehung des "Muskelkaters" und bewirkt im Schutzkomplex mit körpereigenen Stoffen die Entwicklung der hormonellen und katalytischen Antistressoren.

Nach einer weiteren vorteilhaften Ausgestaltung der Erfindung sind als Wirkstoffe L-Threonin, L-Methionin und L-Lysin vorgesehen, um die biologische Wirksamkeit des Caseins bzw. des Sojaeiweißes auf nahezu 100 % zu steigern. Mit dieser Proteinversorgung wird erreicht, dass ausreichend freie Aminosäuren verfügbar sind, die nicht als Energiereserve bei erschöpfter Kohlenhydratversorgung aus dem Muskel verzehrt werden müssen. Bei erklärtem Ziel der Gewichtsreduktion während des Gesamtprogrammes wirkt das Nahrungsergänzungsmittel mit den Proteinhauptkomponenten synergistisch mit weiteren Rezepturbestandteilen und somit der Entwicklung atrophischer Muskeln entgegen.

Nach einer weiteren vorteilhaften Ausgestaltung der Erfindung sind als Wirkstoffe Rutin, Hesperidin und Bioflavonoide vorgesehen. Sie gehören zu der Gruppe der den Flavonoiden entstammenden Flavonone. Als Antioxidanten und Radikalfänger entspannen sie die kapillaren Blutgefäße, wirken kapillaren Blutungen entgegen und fördern somit den Austausch der Mikronährstoffe. Damit dienen sie dazu, Vitamin C im Stoffwechsel aufzunehmen, so dass Vitamin C vollständig resorbiert wird. Es müssen keine hohen Mengen des Vitamin C zugefügt werden, um biologisch wirksam zu sein bzw. resorbiert werden zu können.

Nach einer weiteren vorteilhaften Ausgestaltung der Erfindung weist das Nahrungsergänzungsmittel eine Pulverform auf und ist wasserlöslich. Somit kann es zur Einnahme mit Milch, Wasser oder Fruchtsäften vermischt werden. Außerdem ist das Einrühren in Suppen oder Kaltschalen möglich.

Das Grundrezept des Nahrungsergänzungsmittels besteht aus Proteinen, die sich zu 36,37% aus essenziellen Aminosäuren zusammensetzen. Der Rest kann sich auf verschiedene, nicht-, semi- oder konditionell-essenzielle Aminosäuren verteilen, die sowohl dem Muskelaufbau wie dem Fetttransport dienen. Der Fettanteil besteht aus geschmacksneutralen Pflanzenölen, wie beispielsweise Distelöl oder Olivenöl, oder aus den Omega-3-Fettsäuren des Fischöls. Das Fischöl ist um es geschmacksneutral applizieren zu können, mikroverkapselt. Als Kohlenhydrate ist Maltodextrin als Invert-Zucker, sowie das Galactomannan des Guarkernmehls vorgesehen. Als Balaststoff wirkt das Guakernmehl.

Wird das pulverförmige Nahrungsergänzungsmittel mit Magermilch angerührt, so erhöht sich der Brennwert durch die Kohlenhydrate und Fettanteile der Milch. Bei Fruchtsäften und ähnlichen erhöht sich gegebenenfalls der Kohlenhydratanteil durch die Zuckeranteile der Säfte. Zu dem Grundrezept des Nahrungsergänzungsmittels kommen Mineralien, Spurenelemente und Vitamine als integraler Bestandteil hinzu. Mineralien, Spurenelemente und Vitamine müssen im Rezept so angepasst werden, dass selbst bei einer deutlichen Überdosis die Tageshöchstmengen nicht überschritten werden.

Als Vitamine sind enthalten Vitamin B₁, B₂, B₆, B₁₂, C, D, E, Biotin, Folsäure, Nicotinsäureamid sowie Beta-Carotin. Als Mineralstoffe sind enthalten Calcium, Chrom, Eisen, Flur, Jod, Kalium, Kupfer, Magnesium, Mangan, Nickel, Phosphor, Selen, Silizium, Zink und Zinn. Auf die zusätzliche Zugabe von Phosphor, Schwefel und Natrium wird verzichtet, da diese Stoffe entweder über andere Mineralsalze oder Bestandteile ausreichend eingebracht werden oder deren Versorgung mit den normalen Mahlzeiten gesichert ist. Phosphor steht beispielsweise mit dem Milcheiweiß und dem Tricalciumphosphat zur Verfügung. Schwefel wird aus den Thio-Verbindungen, aus dem Aminosäurestoffwechsel, aus dem Vanadylsulfat oder dem Zinksulfat zur Verfügung gestellt.

Soll das Nahrungsergänzungsmittel zum Muskelaufbau eingesetzt werden, wird das Grundrezept angereichert durch eine Erhöhung der Aminosäureanteile, der Spurenelemente, Mineralien und Vitaminen, während die Fettbestandteile, die Ballaststoffe (das Guarkernmehl) sowie die Kohlenhydrate reduziert werden. Süßstoffe und Aromastoffe bleiben erhalten bzw. werden angepasst, da Aminosäuren einen unangenehmen Geschmack haben.

Als Aminosäuren sind in dem Nahrungsergänzungsmittel beispielsweise enthalten: L-Isoleucin, L-Leucin, L-Lysin, L-Methionin, L-Cystin, L-Phenylalanin, L-Tyrosin, L-Threonin, L-Tryptophan, L-Valin, L-Arginin, L-Histidin, L-Carnitin und L- Creatin. Außerdem können vorgesehen sein: Glycin, Kalium L-Aspartat, L-Alanin, L-Asparagin, L-Citrullin, L-Glutamin, L-Hydroxyprolin, L-Cystein, Ornithin, Serin oder Taurin. Während einige Aminosäuren im Calciumcaseinat oder im Sojaeiweiß bereits in optimaler Menge vorhanden sind, werden L-Threonin, L-Methionin oder L-Lysin speziell hinzugefügt um die biologische Wertigkeit des Calciumcaseinats oder des Sojaeiweißes zu erhöhen. Damit sind in dem Nahrungsergänzungsmittel essentielle, semi-essentielle, nicht-essentielle oder konditionell essentielle Aminosäuren enthalten. Die Aminosäuren werden als Pulver oder als Hydrolysate verwendet, um die Löslichkeit zu verbessern.

Die Fettsäuren liegen als mikroverkapselte Fischöle oder als geschmacksneutrale Pflanzenöle in dem Nahrungsergänzungsmittel vor.

Das Nahrungsergänzungsmittel soll zusätzlich zur normalen Mischkost eingenommen werden, wenn Muskelaufbau gewünscht ist. Bei Gewichtsreduktion sollen bis zu zwei tägliche Mahlzeiten durch das Nahrungsergänzungsmittel ersetzt werden. Pro Mahlzeit/Portion sollen jeweils 20 g des Nahrungsergänzungsmittels mit jeweils einer kleinen Menge Magermilch (Sojamilch), 50 ml, verrührt werden und dann auf 300 ml Trinkmenge aufgefüllt werden mittels Fruchtsäften/Joghurt/Suppen u.ä..

Soll das Nahrungsergänzungsmittel zum Muskelaufbau eingesetzt werden, werden die Aminosäuren auf etwa 80 % der Gesamtmenge angereichert, Ballaststoffe und Kohlenhydrate dementsprechend reduziert.

Soll das Nahrungsergänzungsmittel zur Gewichtsreduktion dienen, werden zugunsten der Ballast- und Quellstoffe die Aminosäuren reduziert.

Soll das Nahrungsergänzungsmittel bei Kindern eingesetzt werden, so wird L-Histidin hinzugegeben. Soll das Nahrungsergänzungsmittel dagegen als Aufbaunahrung bei Senioren eingesetzt werden, so werden Ornithin, Serin und Taurin hinzugegeben. Darüber hinaus sind die Bestandteile identisch.

Anstelle des Milcheiweißes kann auch Soja-Eiweiß verwendet werden. Dies ist empfehlenswert bei bekannter Unverträglichkeitsreaktion auf Milcheiweiß.

Durch Kombination von Vitamin B₁₂ mit Kobalt wird eine Resorption von Vitamin B₁₂ garantiert. Nahrungsergänzungsmittel, die für den freien Verkehr in Deutschland vorgesehen sind, werden jedoch ohne Kobaltbeimengungen hergestellt, da Kobalt rezeptpflichtig ist. In Ländern, in denen Kobalt nicht unter die Rezeptpflicht fällt, wird das Nahrungsergänzungsmittel mit Kobalt verwendet und, sofern für den Export bestimmt ,entsprechend gekennzeichnet.

Weitere Vorteile und vorteilhafte Ausgestaltungen der Erfindung sind den Ansprüchen entnehmbar.

Es ergeben sich damit folgende Zusammensetzungen des Nahrungsergänzungsmittels:

| **1. Zutaten** | | in g/kg von bis | |
|---|---|---|---|
| Milcheiweiß Calciumcaseinat | | **0,00 bis** **800,00** | |
| Sojaeiweiß | | **0,00 bis** **800,00** | |
| Omega Vit EPA Pulver Dry n-3 18:12 | | **0,00 bis** **500,00** | |
| Pflanzliche Fette z. B. Olivenöl | | **0,00 bis** **500,00** | |
| Guarkernmehl | | **0,00 bis** **500,00** | |
| Maltodextrin | | **0,00 bis** **500,00** | |
| Aroma | | **0,00 bis** **50,00** | |
| Süßstoff (Saccharin) | | **0,00 bis** **3,00** | |
| | | | |

| **2. Wirkstoffe** | | | |
|---|---|---|---|
| Vitamin-Mineralstoff-Premix | | **0,00 bis** **500,00** | Siehe ***** detaillierte Aufstellung |
| | | | |
| L-Threonin | | **0,00 bis** **100,00** | In g |
| L-Methionin | | **0,00 bis** **100,00** | In g |
| L-Lysin | | **0,00 bis** **100,00** | In g |
| L-Creatin (Kreatin-monohydrat) | | **0,000 bis** **100,00** | In g |
| L-Carnitin-Tartrat (68 %) | | **0,000 bis** **100,00** | In g |
| Glycin | | **0,000 bis** **200,00** | In g |
| Kalium L-Aspartat | | **0,000 bis** **100,00** | In g |
| L-Alanin | | **0,000 bis** **100,00** | In g |
| L-Arginin | | **0,000 bis** **100,00** | In g |
| L-Asparagin | | **0,000 bis** **100,00** | In g |
| L-Citrullin | | **0,000 bis** **100,00** | In g |
| L-Cystin | | **0,000 bis** **100,00** | In g |
| L-Glutamin | | **0,000 bis** **150,00** | In g |
| L-Cystein | | **0,000 bis** **100,00** | In g |
| L-Histidin | | **0,000 bis** **100,00** | In g |
| L-Hydroxyprolin | | **0,000 bis** **100,00** | In g |
| Ornithin | | **0,000 bis** **100,00** | In g |
| Serin | | **0,000 bis** **100,00** | In g |
| Taurin | | **0,000 bis** **100,00** | In g |
| Tyrosin | | **0,000 bis** **100,00** | In g |
| | | | |
| Tricalciumphosph at (Ca-Gehalt 40 %) | | **0,000 bis** **100,00** | in mg |
| Magnesiumcarbon at (Mg-Gehalt 40 % | | **0,000 bis** **100,00** | In mg |
| Nickel(II)-carbonat (Ni-Gehalt 48-50 %) | | **0,000 bis** **1,00** | In µg |
| Vanadylsulfat | | **0,000 bis** **500,00** | In mg |
| Zinn(II)-fluorid (Sn-Gehalt 74-76 %) | | **0,000 bis** **15,00** | In mg |
| Rutin | | **0,000 bis** **50,00** | In mg |
| Hesperidin | | **0,000 bis** **50,00** | In mg |
| Bioflavonoide (Citrus) | | **0,000 bis** **200,00** | In mg |

Als empfohlene Tagesmengen ergeben sich Zusammensetzungen des Nahrungsergänzungsmittels mit folgenden Anteilen. Die Bereich können um 20-30% variieren:

| **** | Mineralien und Vitamine | | | | |
|---|---|---|---|---|---|
| | empfohlene Tagesmenge | | | | |
| | | | | | |
| Calcium | 800-1200 mg | | | | |
| Chrom | 50-200 µg | | | | |
| Eisen | 10-15 mg | | | | |
| Fluor | 3,1-3,8 mg | | | | |
| Jod | 200 µg | | | | |
| Kalium | 1600-3000 mg | | | | |
| *Kobalt* | *8 µg* | | | | |
| Kupfer | 2-3 mg | | | | |
| Magnesium | 300-350 mg | | | | |
| Mangan | 2-5 mg | | | | |
| Natrium | bis 6000 mg | | | | |
| *Nickel* | *300-600 µg* | | | | |
| Phosphor | 1200-1500 mg | | | | |
| Schwefel | 1000 mg | | | | |
| Selen | 50-75 µg | | | | |
| Silicium | 100 mg | | | | |
| *Vanadylsulfat* | *100 mg* | | | | |
| Zink | 12-15 mg | | | | |
| Zinn | 8-10 mg | | | | |
| Vitamin A | 800-1000 µg | | | | |
| Vitamin B1 | 1,1-1,4 mg | | | | |
| Vitamin B2 | 1,2-1,7 mg | | | | |
| Vitamin B6 | 1,6-1,8 mg | | | | |
| Vitamin B12 | 3-3,5 µg | | | | |
| Vitamin C | 75 mg | | | | |
| Vitamin D | 5-10 µg | | | | |
| Vitamin E | 12 mg | | | | |
| Bioflavonoide | 1000 mg | | | | |
| Biotin | 25-300 µg | | | | |
| Folsäure | | | | | |
| Hesperidin | bis 300 mg | | | | |
| Nicotinsäure amid | 15-18 mg | | | | |
| Pantothensäure | 6 mg | | | | |
| Rutin | bis 300 mg | | | | |
| | | | | | |

## Patentansprüche

1. Nahrungsergänzungsmittel als Reduküonskost und/ oder zum Muskelaufbau für Sportler
mit Milcheiweiß oder Sojaeiweiß, Omega-3-Fettsäuren, oder geschmacksneutralen Pflanzenölen, Aminosäuren, Vitaminen, Mineralien, Spurenelementen, Ballaststoffen und Kohlenhydraten,
**dadurch gekennzeichnet,**
**daß** als Wirkstoffe Bioflavonoide enthalten sind.

2. Nahrungsergänzungsmittel nach Anspruch 1, **dadurch gekennzeichnet, daß** es einen Anteil an Milcheiweiß Calciumcaseinat von 10 bis 900g/ kg aufweist.

3. Nahrungsergänzungsmittel nach Anspruch 1, **dadurch gekennzeichnet, daß** es einen Anteil an Sojaeiweiß von 10 bis 900g/ kg aufweist.

4. Nahrungsergänzungsmittel nach Anspruch 1, **dadurch gekennzeichnet, daß** es einen Anteil an Omega-3-Fettsäuren von 50 bis 500g/ kg aufweist.

5. Nahrungsergänzungsmittel nach Anspruch 1, **dadurch gekennzeichnet, daß** es einen Anteil an geschmacksneutralen Pflanzenölen von 50 bis 500g/ kg aufweist.

6. Nahrungsergänzungsmittel nach Anspruch 5, **dadurch gekennzeichnet, dass** als geschmacksneutrale Pflanzenöle Olivenöl oder Distelöl vorgesehen sind.

7. Nahrungsergänzungsmittel nach Anspruch 1, **dadurch gekennzeichnet, daß** es einen Anteil an Aminosäuren von 10 bis 900g/ kg aufweist.

8. Nahrungsergänzungsmittel nach Anspruch 1, **dadurch gekennzeichnet, daß** es einen Anteil an Vitaminen, Mineralien und Spurenelementen zusammen von 0,1 bis 200g/ kg aufweist.

9. Nahrungsergänzungsmittel nach Anspruch 1, **dadurch gekennzeichnet, daß** es einen Anteil an Maltodextrin von 1 bis 500g/ kg, insbesondere von 1 bis 15g/ kg aufweist.

10. Nahrungsergänzungsmittel nach Anspruch 1, **dadurch gekennzeichnet, daß** als weitere Zutaten Aromastoffe und/ oder Süsstoffe vorgesehen sind.

11. Nahrungsergänzungsmittel nach Anspruch 10, **dadurch gekennzeichnet, daß** es einen Anteil an Aromastoffen von 1 bis 50g/ kg aufweist.

12. Nahrungsergänzungsmittel nach Anspruch 10, **dadurch gekennzeichnet, daß** es einen Anteil an Süßstoffen von 1 bis 3g/ kg aufweist.

13. Nahrungsergänzungsmittel nach Anspruch 10, **dadurch gekennzeichnet, daß** als Süßstoff Saccharin vorgesehen ist.

14. Nahrungsergänzungsmittel nach einem der vorhergehenden Ansprüche, **dadurch gekennzeichnet, daß** als weitere Zutat Guarkernmehl vorgesehen ist.

15. Nahrungsergänzungsmittel nach Anspruch 14, **dadurch gekennzeichnet, daß** es einen Anteil an Guarkemmehl von 0 bis 500g/ kg aufweist.

16. Nahrungsergänzungsmittel nach einem der vorhergehenden Ansprüche, **dadurch gekennzeichnet, daß** als Wirkstoffe essentielle, nicht-essentielle und/ oder semi-essentielle Aminosäuren vorgesehen sind.

17. Nahrungsergänzungsmittel nach einem der vorhergehenden Ansprüche, **dadurch gekennzeichnet, daß** als Wirkstoffe die Aminosäuren L-Threonin, L-Creatin und L-Carnitin-Tartrat vorgesehen sind.

18. Nahrungsergänzungsmittel nach einem der vorhergehenden Ansprüche, **dadurch gekennzeichnet, daß** als Wirkstoffe die Aminosäuren L-Isoleucin, L-Leucin, L-Lysin, L-Methionin, L-Cystin, L-Phenylalanin, L-Tyrosin, L-Tryptophan, L-Valin, L-Arginin, L-Histidin, L-Aspartat, L-Alanin, L-Asparagin, L-Citrullin, L-Glutamin und L-Cystein, vorgesehen sind.

19. Nahrungsergänzungsmittel nach Anspruch 18, **dadurch gekennzeichnet, daß** es einen Anteil an L-Methionin von 0,5 bis 100g/ kg aufweist, daß es einen Anteil an L-Lysin von 0,5 bis 100g/ kg aufweist, dass es einen Anteil an L-Creatin von 0,5 bis 100g/ kg und daß es einen Anteil an L-Carnitin-Tartrat von 0,1 bis 100g/ kg aufweist.

20. Nahrungsergänzungsmittel nach Anspruch 17 und 18, **dadurch gekennzeichnet, daß** der Anteil einer Aminosäure zwischen 0,001 und 900 g/kg beträgt.

21. Nahrungsergänzungsmittel nach einem der vorhergehenden Anspruche, **dadurch gekennzeichnet, daß** als Wirkstoffe Glycin, Kalium-L-Aspartat, L-Hydroxyprolin, Omithin. Serin oder Taurin vorgesehen sind.

22. Nahrungsergänzungsmittel nach einem der vorhergehenden Ansprüche, **dadurch gekennzeichnet, daß** als Wirkstoff Vanadylsulfat vorgesehen ist.

23. Nahrungsergänzungsmittel nach Anspruch 22, **dadurch gekennzeichnet, daß** es einen Anteil an Vanadylsulfat von 0,05 bis 100g/kg aufweist.

24. Nahrungsergänzungsmittel nach einem der vorhergehenden Ansprüche, **dadurch gekennzeichnet, daß** als Wirkstoffe Tricalciumphosphat, Magnesiumcarbonat, Nickelcarbonat, Calciumphosphat, Kaliumchlorid, Eisenfumarat, Zinksulfat, Kupfergluconat, Pyridoxinhydrochlorid, Mangansulfat, Zinnfluorid, Natriumselenit, Calcium-D-Pantothenat, Kaliumjodit, Chromchlorid, Thiaminmononitrat und/ oder Natriumfluorid vorgesehen sind.

25. Nahrungsergänzungsmittel nach Anspruch 24, **dadurch gekennzeichnet, daß** es einen Anteil an Mineralstoffen von insgesamt 0,001 bis 6.000,000 mg/ Kg aufweist.

26. Nahrungsergänzungsmittel nach einem der vorhergehenden Ansprüche, **dadurch gekennzeichnet, daß** als Wirkstoffe Ascorbinsäure, Riboflavin, Vitamin E-Acetat, Rutin, Hesperidin, Nicotinamid, Provitamin A, Vitamin D₃, Folsäure, Cyanocobalamin und/ oder Biotin vorgesehen sind.

27. Nahrungsergänzungsmittel nach Anspruch 26, **dadurch gekennzeichnet, daß** es einen Anteil an den Wirkstoffen Bioflavonoide, Ascorbinsäure, Riboflavin, Vitamin E-Acetat, Rutin, Hesperidin, Nicotinamid. Provitamin A, Vitamin D₃, Folsäure, Cyanocobalamin und/ oder Biotin von insgesamt 0,001 bis 2.000,000 mg/ kg.

28. Nahrungsergänzungsmittel nach einem der vorhergehenden Ansprüche, **dadurch gekennzeichnet, daß** es eine Pulverform aufweist und in Wasser, Magermilch und/ oder Sojamilch löslich ist.

## Claims

1. Nutritional supplement for weight reduction and/or for muscle development for sportspeople,
containing lactoprotein or soya protein, omega-3 fatty acids or taste-neutral vegetable oils, amino acids, vitamins, minerals, trace elements, ballast and carbohydrates,
**characterised in that**
bioflavonoids are contained as active agents.

2. Nutritional supplement according to claim 1, **characterised in that** it has a proportion of the lactoprotein calcium caseinate of 10 to 900 g/kg.

3. Nutritional supplement according to claim 1, **characterised in that** it has a proportion of soya protein of 10 to 900 g/kg.

4. Nutritional supplement according to claim 1, **characterised in that** it has a proportion of omega-3 fatty acids of 50 to 500 g/kg.

5. Nutritional supplement according to claim 1, **characterised in that** it has a proportion of the taste-neutral vegetable oils of 50 to 500 g/kg.

6. Nutritional supplement according to claim 5, **characterised in that** olive oil or safflower oil is provided as taste-neutral vegetable oils.

7. Nutritional supplement according to claim 1, **characterised in that** it has a proportion of amino acids of 10 to 900 g/kg.

8. Nutritional supplement according to claim 1, **characterised in that** it has a proportion of vitamins, minerals and trace elements together of 0.1 to 200 g/kg.

9. Nutritional supplement according to claim 1, **characterised in that** it has a proportion of maltodextrin of 1 to 500 g/kg, in particular of 1 to 15 g/kg.

10. Nutritional supplement according to claim 1, **characterised in that** flavourings and/or sweeteners are provided as further ingredients.

11. Nutritional supplement according to claim 10, **characterised in that** it has a proportion of flavourings of 1 to 50 g/kg.

12. Nutritional supplement according to claim 10, **characterised in that** it has a proportion of sweeteners of 1 to 3 g/kg.

13. Nutritional supplement according to claim 10, **characterised in that** saccharine is provided as a sweetener.

14. Nutritional supplement according to one of the previous claims, **characterised in that** guar gum is provided as a further ingredient.

15. Nutritional supplement according to claim 14, **characterised in that** it has a proportion of guar gum of 0 to 500 g/kg.

16. Nutritional supplement according to one of the previous claims, **characterised in that** essential, non-essential and/or semi-essential amino acids are provided as active agents.

17. Nutritional supplement according to one of the previous claims, **characterised in that** the amino acids L-threonine, L-creatine and L-carnitine tartrate are provided as active agents.

18. Nutritional supplement according to one of the previous claims, **characterised in that** the amino acids L-isoleucine, L-leucine, L-lysine, L-methionine, L-cystine, L-phenylalanine, L-tyrosine, L-tryptophan, L-valine, L-arginine, L-histidine, L-aspartate, L-alanine, L-asparagine, L-citrulline, L-glutamine and L-cysteine are provided as active agents.

19. Nutritional supplement according to claim 18, **characterised in that** it has a proportion of L-methionine of 0.5 to 100 g/kg, that it has a proportion of L-lysine of 0.5 to 100 g/kg, that it has a proportion of L-creatine of 0.5 to 100 g/kg and that it has a proportion of L-carnitine tartrate of 0.1 to 100 g/kg.

20. Nutritional supplement according to claims 17 and 18, **characterised in that** the proportion of an amino acid is between 0.001 and 900 g/kg.

21. Nutritional supplement according to one of the previous claims, **characterised in that** glycine, potassium L-aspartate, L-hydroxyproline, ornithine, serine or taurine are provided as active agents.

22. Nutritional supplement according to one of the previous claims, **characterised in that** vanadyl sulphate is provided as an active agent.

23. Nutritional supplement according to claim 22, **characterised in that** it has a proportion of vanadyl sulphate of 0.05 to 100 g/kg.

24. Nutritional supplement according to one of the previous claims, **characterised in that** tricalcium phosphate, magnesium carbonate, nickel carbonate, calcium phosphate, potassium chloride, iron fumarate, zinc sulphate, copper gluconate, pyridoxine hydrochloride, manganese sulphate, tin fluoride, sodium selenite, calcium D-pantothenate, potassium iodide, chromium chloride, thiamine mononitrate and/or sodium fluoride are provided as active agents.

25. Nutritional supplement according to claim 24, **characterised in that** it has a total proportion of minerals of 0.001 to 6,000.000 mg/kg.

26. Nutritional supplement according to one of the previous claims, **characterised in that** ascorbic acid, riboflavin, vitamin E acetate, rutin, hesperidin, nicotinamide, provitamin A, vitamin D₃, folic acid, cyanocobalamine and/or biotin are provided as active agents.

27. Nutritional supplement according to claim 26, **characterised in that** it has a total proportion of the active agents bioflavonoids, ascorbic acid, riboflavin, vitamin E acetate, rutin, hesperidin, nicotinamide, provitamin A, vitamin D₃, folic acid, cyanocobalamine and/or biotin of 0.001 to 2,000.000 mg/kg.

28. Nutritional supplement according to one of the previous claims, **characterised in that** it has a powder form and is soluble in water, skimmed milk and/or soya milk.

## Revendications

1. Complément alimentaire pour la perte de poids et/ou pour le développement musculaire chez les sportifs,
contenant protéines de lait ou de soja, acides gras oméga-3 ou huiles végétales au goût neutre, acides aminés, vitamines, minéraux, oligo-éléments, fibres et glucides,
**caractérisé en ce**
**qu'**il contient des bioflavonoïdes comme substances actives.

2. Complément alimentaire selon la revendication 1, **caractérisé en ce qu'**il présente une teneur en caséinate de calcium (protéine de lait) de 10 à 900 g/kg.

3. Complément alimentaire selon la revendication 1, **caractérisé en ce qu'**il présente une teneur en protéines de soja de 10 à 900 g/kg.

4. Complément alimentaire selon la revendication 1, **caractérisé en ce qu'**il présente une teneur en acides gras oméga-3 de 50 à 500 g/kg.

5. Complément alimentaire selon la revendication 1, **caractérisé en ce qu'**il présente une teneur en huiles végétales au goût neutre de 50 à 500 g/kg.

6. Complément alimentaire selon la revendication 5, **caractérisé en ce que** de l'huile d'olive ou de l'huile de carthame est prévue comme huile végétale au goût neutre.

7. Complément alimentaire selon la revendication 1, **caractérisé en ce qu'**il présente une teneur en acides aminés de 10 à 900 g/kg.

8. Complément alimentaire selon la revendication 1, **caractérisé en ce qu'**il présente une teneur totale en vitamines, minéraux et oligo-éléments de 0,1 à 200 g/kg.

9. Complément alimentaire selon la revendication 1, **caractérisé en ce qu'**il présente une teneur en maltodextrine de 1 à 500 g/kg, en particulier de 1 à 15 g/kg.

10. Complément alimentaire selon la revendication 1, **caractérisé en ce que** des arômes et/ou des édulcorants sont également prévus dans la composition.

11. Complément alimentaire selon la revendication 10, **caractérisé en ce qu'**il présente une teneur en arômes de 1 à 50 g/kg.

12. Complément alimentaire selon la revendication 10, **caractérisé en ce qu'**il présente une teneur en édulcorants de 1 à 3 g/kg.

13. Complément alimentaire selon la revendication 10, **caractérisé en ce que** de la saccharine est prévue comme édulcorant.

14. Complément alimentaire selon l'une quelconque des revendications précédentes, **caractérisé en ce que** de la gomme de guar est également prévue dans la composition.

15. Complément alimentaire selon la revendication 14, **caractérisé en ce qu'**il présente une teneur en gomme de guar de 0 à 500 g/kg.

16. Complément alimentaire selon l'une quelconque des revendications précédentes, **caractérisé en ce que** des acides aminés essentiels, non essentiels et/ou semi-essentiels sont prévus comme substances actives.

17. Complément alimentaire selon l'une quelconque des revendications précédentes, **caractérisé en ce que** les acides aminés L-thréonine, L-créatine et L-carnitine tartrate sont prévus comme substances actives.

18. Complément alimentaire selon l'une quelconque des revendications précédentes, **caractérisé en ce que** les acides aminés L-isoleucine, L-leucine, L-lysine, L-méthionine, L-cystine, L-phénylalanine, L-tyrosine, L-tryptophane, L-valine, L-arginine, L-histidine, L-aspartate, L-alanine, L-asparagine, L-citrulline, L-glutamine et L-cystéine sont prévus comme substances actives.

19. Complément alimentaire selon la revendication 18, **caractérisé en ce qu'**il présente une teneur en L-méthionine de 0,5 à 100 g/kg, une teneur en L-lysine de 0,5 à 100 g/kg, une teneur en L-créatine de 0,5 à 100 g/kg et une teneur en L-carnitine tartrate de 0,1 à 100 g/kg.

20. Complément alimentaire selon les revendications 17 et 18, **caractérisé en ce que** la teneur d'un acide aminé se situe entre 0,001 et 900 g/kg.

21. Complément alimentaire selon l'une quelconque des revendications précédentes, **caractérisé en ce que** de la glycine, du L-aspartate de potassium, du L-hydroxyproline, de l'ornithine, de la sérine ou de la taurine sont prévus comme substances actives.

22. Complément alimentaire selon l'une quelconque des revendications précédentes, **caractérisé en ce que** du sulfate de vanadyle est prévu comme substance active.

23. Complément alimentaire selon la revendication 22, **caractérisé en ce qu'**il présente une teneur en sulfate de vanadyle de 0,05 à 100 g/kg.

24. Complément alimentaire selon l'une quelconque des revendications précédentes, **caractérisé en ce que** du phosphate de tricalcium, du carbonate de magnésium, du carbonate de nickel, du phosphate de calcium, du chlorate de potassium, du fumarate de fer, du sulfate de zinc, du gluconate de cuivre, du chlorhydrate de pyridoxine, du sulfate de manganèse, du fluorure d'étain, du sélénite de sodium, du D-pantothénate de calcium, de l'iodure de potassium, du chlorure de chrome, du mononitrate de thiamine et/ou du fluorure de sodium sont prévus comme substances actives.

25. Complément alimentaire selon la revendication 24, **caractérisé en ce qu'**il présente une teneur totale en substances minérales de 0,001 à 6 000,000 mg/kg.

26. Complément alimentaire selon l'une quelconque des revendications précédentes, **caractérisé en ce que** des de l'acide ascorbique, de la riboflavine, de la vitamine E acétate, de la rutine, de l'hespéridine, du nicotinamide, de la provitamine A, de la vitamine D₃, de l'acide folique, de la cyanocobalamine et/ou de la biotine sont prévus comme substances actives.

27. Complément alimentaire selon la revendication 26, **caractérisé en ce qu'**il présente une teneur totale en bioflavonoïdes, acide ascorbique, riboflavine, vitamine E-acétate, rutine, hespéridine, nicotinamide, provitamine A, vitamine D₃, acide folique, cyanocobalamine et/ou biotine de 0,001 à 2 000,000 mg/kg.

28. Complément alimentaire selon l'une quelconque des revendications précédentes, **caractérisé en ce qu'**il se présente sous forme de poudre et est soluble dans l'eau, le lait écrémé et/ou le lait de soja.
